# EUROPÄISCHE PATENTSCHRIFT

(11) **EP 2 459 969 B1**
(45) Veröffentlichungstag und Bekanntmachung des Hinweises auf die Patenterteilung: **06.07.2016**
(21) Anmeldenummer: 10737537.0
(22) Anmeldetag: 21.07.2010
(51) Int. Cl.: G01D 5/14

(54) **POSITIONSSENSOR UND LINEARAKTUATOR**
POSITION SENSOR AND LINEAR ACTUATOR
CAPTEUR DE POSITION ET ACTIONNEUR LINÉAIRE

(30) Priorität: 28.07.2009 DE 102009035091
(43) Veröffentlichungstag der Anmeldung: 06.06.2012
(73) Patentinhaber: Mahle International GmbH, 70376 Stuttgart (DE)
(72) Erfinder: DRESPLING, Hans-Peter, 89522 Heidenheim (DE); NIEBEL, Marc, 73663 Berglen (DE); WAIDELICH, Jochen, 74369 Löchgau (DE)
(74) Vertreter: BRP Renaud & Partner mbB Rechtsanwälte Patentanwälte Steuerberater
(86) Internationale Anmeldenummer: PCT/EP2010/060543
(87) Internationale Veröffentlichungsnummer: WO 2011/012511

(56) Entgegenhaltungen:
- WO-A2-2004/074853
- DE-A1-102006 048 084
- JP-A- H09 264 703
- US-A1- 2002 118 011
- US-A1- 2005 134 257
- US-A1- 2007 216 402
- US-A1- 2008 272 768
- US-B1- 7 088 095

## Beschreibung

Die vorliegende Erfindung betrifft einen Linearaktuator, der mit einem linearen magnetischen Positionssensor ausgestattet ist, mit den Merkmalen des Oberbegriffs des Anspruchs 1.

Lineare magnetische Positionssensoren arbeiten mit einem Hallsensor, der in einer linearen Messstrecke relativ zu einem Magnetfeld verstellbar ist, das mit Hilfe von Permanentmagneten erzeugt wird. Entlang der Messstrecke verändert sich das Magnetfeld, was vom Hallsensor erfasst und mittels einer entsprechenden Auswerteschaltung in eine Relativposition zwischen Hallsensor und Magnetfeld bzw. Messstrecke umgerechnet werden kann. Um eine möglichst exakte Positionsmessung durchführen zu können, ist ein möglichst lineares Magnetfeld innerhalb der Messstrecke von Vorteil. Bei einem linearen Magnetfeld ändert sich die magnetische Feldstärke entlang der Messstrecke linear, also mit konstanter Steigung. Da sich die magnetischen Feldlinien von einem Permanentmagneten räumlich ausbreiten, lässt sich innerhalb einer Messstrecke ein derartiges lineares Magnetfeld nicht ohne weiteres realisieren.

Aus der US 7,088,095 B1 ist ein linearer magnetischer Positionssensor bekannt, der eine zwei Permanentmagnete aufweisende Magnetfelderzeugungseinrichtung zum Erzeugen eines Magnetfelds aufweist. Ferner umfasst der bekannte Positionssensor einen Hallsensor, der in einem eine lineare Messstrecke bildenden Bereich des Magnetfelds angeordnet ist. Dabei sind der Hallsensor und die Magnetfelderzeugungseinrichtung relativ zueinander entlang einer Längsrichtung linear verstellbar, um so den Hallsensor innerhalb der Messstrecke zu positionieren. Ferner sind die Permanentmagnete in einer senkrecht zur Längsrichtung verlaufenden Querrichtung polarisiert. Das bedeutet, dass sich Nordpol und Südpol am jeweiligen Permanentmagneten bzgl. der Querrichtung an entgegengesetzten Enden befinden.

Um innerhalb der Messstrecke ein lineares Magnetfeld zu generieren, sind beim bekannten Positionssensor die beiden Permanentmagnete so gestaltet, dass sie sich in der Längsrichtung seitlich entlang der gesamten Messstrecke und an beiden Enden darüber hinaus erstrecken. Ferner sind sie gegensinnig polarisiert, sodass sich bspw. die beiden Südpole gegenüberliegen. Darüber hinaus sind beide Permanentmagnete an ihren einander und der Messstrecke zugewandten Innenseiten jeweils konvex gekrümmt. Die Krümmungen sind dabei so ausgeführt, dass sich innerhalb der Messstrecke das gewünschte lineare Magnetfeld ergibt.

Diese Vorgehensweise ist vergleichsweise aufwändig. Bspw. können Toleranzen bei der Herstellung der gekrümmten Innenseiten zu signifikanten Abweichungen bei der Linearität des erwünschten Magnetfelds führen. Auch muss der Hallsensor sehr genau relativ zu den Permanentmagneten positioniert und verstellt werden, um innerhalb des linearen Bereichs des Magnetfelds zu bleiben.

Aus der US 2005/0134257 A1 ist ein weiterer Positionssensor bekannt, der mit vier einzelnen Permanentmagneten arbeitet, die keilförmige Profile aufweisen und dadurch eine rautenförmige Messstrecke erzeugen. Im Zentrum der Messstrecke sind die in der Längsrichtung aufeinander zulaufenden und sich dabei verjüngenden Permanentmagnete zueinander beabstandet. Beim bekannten Positionssensor wird mit Hilfe der Permanentmagnete ein offener magnetischer Kreis erzeugt. Dabei erstrecken sich die keilförmigen Permanentmagnete seitlich entlang eines wesentlichen Abschnitts der Messstrecke. Ein derartiger offener Magnetkreis ist insbesondere gegenüber thermischen Einflüssen störanfällig.

Ein gattungsgemäßer Linearaktuator ist aus der De 10 2006 048 084 A1 bekannt. Er besitzt eine Koppelstange, die mit einem linear zu verstellenden Bauteil koppelbar ist und die relativ zu einem Aktuatorgehäuse linear verstellbar ist, eine Aktuatoreinrichtung zur linearen Verstellung der Koppelstange und einen linearen magnetischen Positionssensor zum Erfassen der Relativlage zwischen Koppelstange und Aktuatorgehäuse, wobei der Positionssensor eine zwei Permanentmagnete aufweisende Magnetfelderzeugungseinrichtung zum Erzeugen eines Magnetfelds sowie einen Hallsensor aufweist, der in einem eine lineare Messstrecke bildenden Bereich des Magnetfelds angeordnet ist, wobei Hallsensor und Magnetfelderzeugungseinrichtung relativ zueinander entlang einer Längsrichtung linear verstellbar sind, um den Hallsensor innerhalb der Messstrecke zu positionieren. Beim bekannten Linearaktuator sind die Permanentmagnete in der Längsrichtung polarisiert und quer zur Längsrichtung zueinander beabstandet angeordnet. Somit ist beim bekannten Linearaktuator der Bereich des Magnetfelds, in dem die Messstrecke linear ist, relativ klein.

Aus der JP H09 264 703 A und aus der US 2002/0118011 A1 ist jeweils ein inearer magnetischer Positionssensor bekannt, der ebenfalls eine zwei Permanentmagnete aufweisende Magnetfelderzeugungseinrichtung zum Erzeugen eines Magnetfelds sowie einen Hallsensor aufweist, der in einem eine lineare Messstrecke bildenden Bereich des Magnetfelds angeordnet ist, wobei Hallsensor und Magnetfelderzeugungseinrichtung relativ zueinander entlang einer Längsrichtung linear verstellbar sind, um den Hallsensor innerhalb der Messstrecke zu positionieren. Bei diesen bekannten Positionssensoren sind die Permanentmagnete in einer senkrecht zur Längsrichtung verlaufenden Querrichtung polarisiert und in der Längsrichtung zueinander beabstandet angeordnet. Ferner ist jeder Pol des einen Permanentmagneten über je ein Magnetleitelement mit einem Pol des anderen Permanentmagneten verbunden. Schließlich ist die Messstrecke, innerhalb welcher der Hallsensor linear positionierbar ist, in der Längsrichtung um die in der Längsrichtung gemessene Länge des Hallsensors kürzer als ein Magnetabstand zwischen den Permanentmagneten.

Die vorliegende Erfindung beschäftigt sich mit dem Problem, für einen mit einem Positionssensor der eingangs genannten Artausgestatteten Linearaktuator eine verbesserte Ausführungsform anzugeben, die sich insbesondere durch eine vergleichsweise preiswerte Herstellbarkeit auszeichnet, wobei außerdem eine erhöhte Messgenauigkeit für die Positionsmessung angestrebt ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Permanentmagnete in der Längsrichtung voneinander zu beabstanden und an ihren Polen mit Hilfe von Magnetleitelementen zu verbinden. Über die beiden Magnetleitelemente werden die beiden Permanentmagnete zu einem geschlossenen magnetischen Kreis miteinander verbunden. Das mit Hilfe der Magnetfelderzeugungseinrichtung erzeugte Magnetfeld befindet sich somit in der Längsrichtung zwischen den Permanentmagneten und in der Querrichtung zwischen den Magnetleitelementen. Dabei wird das Magnetfeld zumindest im Bereich der Messstrecke nicht direkt durch das Magnetfeld der Permanentmagnete gebildet, sondern nur indirekt, nämlich durch den magnetischen Fluss in den Magnetleitelementen. Dabei nutzt die Erfindung die Erkenntnis, dass innerhalb der Magnetleitelemente ein vergleichsweise homogenes Magnetfeld vorliegt, wodurch auch zwischen den Magnetleitelementen im Bereich der Messstrecke ein weitgehend lineares Magnetfeld herrscht. Die vorgeschlagene Magnetfelderzeugungseinrichtung kommt dabei mit extrem einfachen Geometrien für die Permanentmagnete und für die Magnetleitelemente aus, was die Herstellung vereinfacht. Außerdem ist die Anfälligkeit gegenüber Herstellungstoleranzen deutlich reduziert. Durch den geschlossenen Magnetkreis lassen sich thermische Einflüsse reduzieren.

Bspw. können die Magnetleitelemente an einander und der Messstrecke zugewandten Innenseiten in der Längsrichtung äquidistant und/oder eben ausgestaltet sein, was deren Herstellung vereinfacht. Zusätzlich oder alternativ können sich die Magnetleitelemente in der Längsrichtung erstrecken und/oder parallel zueinander erstrecken. Ferner können sich die Magnetleitelemente linear erstrecken und/oder in der Längsrichtung jeweils ein konstantes Querschnittsprofil aufweisen. Alternativ ist es ebenso möglich, die Magnetleitelemente zur weiteren, gezielten Beeinflussung des Magnetfelds innerhalb und/oder außerhalb der Messstrecke trapezförmig, geknickt, gewölbt oder in einer sonstigen geeigneten Weise geformt auszugestalten. Insbesondere können die Magnetleitelemente entlang der Längsrichtung eine variierende Breite und/oder eine variierende Dicke aufweisen, wobei sie zweckmäßig einen spiegelsymmetrischen Aufbau besitzen. Ganz allgemein können die Magnetleitelement entsprechend einer bevorzugten Ausführungsform geometrisch so gestaltet sein, dass in der Messstrecke ein im Wesentlichen lineares Magnetfeld vorliegt.

Die Magnetleitelemente bestehen bevorzugt aus einem weichmagnetischen Material, insbesondere aus einem ferromagnetischen Material und vorzugsweise aus einem Eisenblech.

Besonders günstig ist eine Bauweise, bei welcher jedes Magnetleitelement den Südpol des einen Permanentmagneten mit dem Nordpol des anderen Permanentmagneten verbindet. Hierdurch ergibt sich ein in sich geschlossener Magnetfeldpfad.

Erfindungsgemäß ist die Messstrecke, innerhalb welcher der Hallsensor linear positionierbar ist, in der Längsrichtung kürzer ausgestaltet als ein Magnetabstand zwischen den Permanentmagneten, derart, dass sich die Messstrecke in der Längsrichtung über maximal 70% des Magnetabstands erstreckt. Dabei kann es vorteilhaft sein, die Messstrecke mittig zwischen den Permanentmagneten anzuordnen. Diese Ausgestaltung beruht auf der Erkenntnis, dass das unmittelbar von den Permanentmagneten erzeugte Magnetfeld auf die Magnetfeldmessung des Hallsensors einen Einfluss hat, der mit abnehmendem Abstand zum Permanentmagneten ansteigt. Durch eine Verkürzung der Messstrecke gegenüber dem Magnetabstand besitzt der Hallsensor auch an den Längsenden der Messstrecke einen Abstand gegenüber den Permanentmagneten, was die Genauigkeit der Positionsmessung verbessert.

Es hat sich ferner gezeigt, dass es für die Realisierung eines möglichst linearen Magnetfelds innerhalb der Messstrecke vorteilhaft ist, wenn der Messstrecke zugewandte innenliegende Enden der Permanentmagnete in der Längsrichtung einen Magnetabstand voneinander aufweisen, der mindestens gleich groß ist wie oder größer ist als die Messstrecke. Insbesondere können die Permanentmagnete dadurch mit einer besonders einfachen Geometrie hergestellt werden, z.B. als Quader mit Rechteckflächen, was vergleichsweise preiswert realisierbar ist. Zusätzlich oder alternativ können die Permanentmagnete in der Längsrichtung vollständig außerhalb der Messstrecke angeordnet sein, wodurch sich ihr Einfluss auf das Magnetfeld innerhalb der Messstrecke erheblich reduziert, so dass dieses weitgehend und vorzugsweise ausschließlich durch den Magnetfluss innerhalb der Magnetleitelemente bestimmt ist.

Besonders vorteilhaft ist dabei eine Weiterbildung, bei welcher die Messstrecke an ihren Längsenden soweit von den Permanentmagneten beabstandet ist, dass an den Längsenden der Messstrecke der Einfluss des Magnetfelds des benachbarten Permanentmagneten auf das in der Messstrecke zwischen den Magnetleitelementen herrschende Magnetfeld für die Magnetfeldmessung des Hallsensors vernachlässigbar ist. Durch die Bauweise ist sichergestellt, dass ausschließlich im linearen Bereich des Magnetfelds gemessen wird.

Ebenso ist es von Vorteil, die Magnetleitelemente in der Querrichtung so dick auszugestalten, dass in den Magnetleitelementen im Wesentlichen keine magnetische Sättigung auftritt. Durch diese Bauweise lässt sich innerhalb der Magnetleitelemente eine hohe Homogenität magnetischer Feldlinien erreichen, was die Linearität des Magnetfelds zwischen den Magnetleitelementen verbessert. Sobald innerhalb der Magnetleitelemente die magnetische Sättigung auftritt, besteht die Gefahr, dass sich die magnetischen Feldlinien auch außerhalb der Magnetleitelemente ausbreiten, wodurch ein Streufeld entsteht, das die Linearität des Magnetfelds innerhalb der Messstrecke beeinträchtigt.

Der hier vorgestellte Linearaktuator umfasst eine Koppelstange und eine Aktuatoreinrichtung. Die Koppelstange ist mit einem linear zu verstellenden Bauteil koppelbar und ist relativ zu einem Aktuatorgehäuse linear verstellbar. Die Aktuatoreinrichtung dient zum linearen Verstellen der Koppelstange. Der Positionssensor ist nun zum Erfassen der Relativlage zwischen Koppelstange und Aktuatorgehäuse vorgesehen. Hierzu kann die Koppelstange entsprechend einer vorteilhaften Ausführungsform mit der Magnetfelderzeugungseinrichtung antriebsverbunden sein, während der Hallsensor fest mit dem Aktuatorgehäuse verbunden ist.

Gemäß einer bevorzugten Bauform, kann eine Hallsensoreinheit vorgesehen sein, die den Hallsensor sowie elektrische Anschlüsse des Positionssensors aufweist und die an das Aktuatorgehäuse angebaut ist. Positionssensor und Linearaktuator sind dabei hinsichtlich ihrer Komponenten aneinander adaptiert, derart, dass einerseits eine separate Herstellung möglich ist, während andererseits ein vereinfachter Zusammenbau realisierbar ist.

Gemäß einer anderen Weiterbildung, kann eine Magneteinheit vorgesehen sein, welche die Magnetfelderzeugungseinrichtung aufweist und die in einer am Aktuatorgehäuse ausgebildeten Linearführung linear geführt verstellbar angeordnet ist. Auf diese Weise werden wesentliche Komponenten des Positionssensors, nämlich die Linearführung der Magneteinheit, in einer Komponente des Linearaktuators, nämlich im Aktuatorgehäuse bereitgestellt, was die gegenseitige bauliche Integration von Linearaktuator und Positionssensor erhöht und somit die Herstellung und Montage vereinfacht.

Der Aktuator ist derart ausgestaltet, dass er zum Steuern eines Fluidstromes, insbesondere von Gasen wie z. B. einer Brennkraftmaschine zugeführten Frischluft oder auch von Abgasen einer Brennkraftmaschine, verwendbar ist. Hierbei kann der Aktuator mit einer Drosseleinheit, welche insbesondere als Klappe ausgeführt ist, verbunden sein. Durch den Positionssensor kann die Stellung der Drosseleinheit und somit die Durchflussrate des Fluides gesteuert werden. Der Aktuator kann beispielsweise als Unterdruck-Dose oder als elektrisch angetriebener/betätigter Steller ausgeführt sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Seitenansicht eines Positionssensors,
- Fig. 2: einen Längsschnitt des Positionssensors, jedoch bei einer anderen Ausführungsform,
- Figur 2a: einen Schnitt entlang Schnittlinie A-A gemäß Figur 2,
- Fig. 3: einen weiteren Längsschnitt des Positionssensors, der gegenüber der Darstellung aus Fig. 2 um 90° gedreht ist,
- Fig. 4: einen stark vereinfachten Längsschnitt eines Linearaktuators,
- Fig. 5a und 5b: jeweils eine stark vereinfachte Draufsicht des Positionssensors bei verschiedenen Ausführungsformen,
- Fig. 6a und 6b: jeweils eine stark vereinfachte Seitenansicht des Positionssensors bei verschiedenen Ausführungsformen.

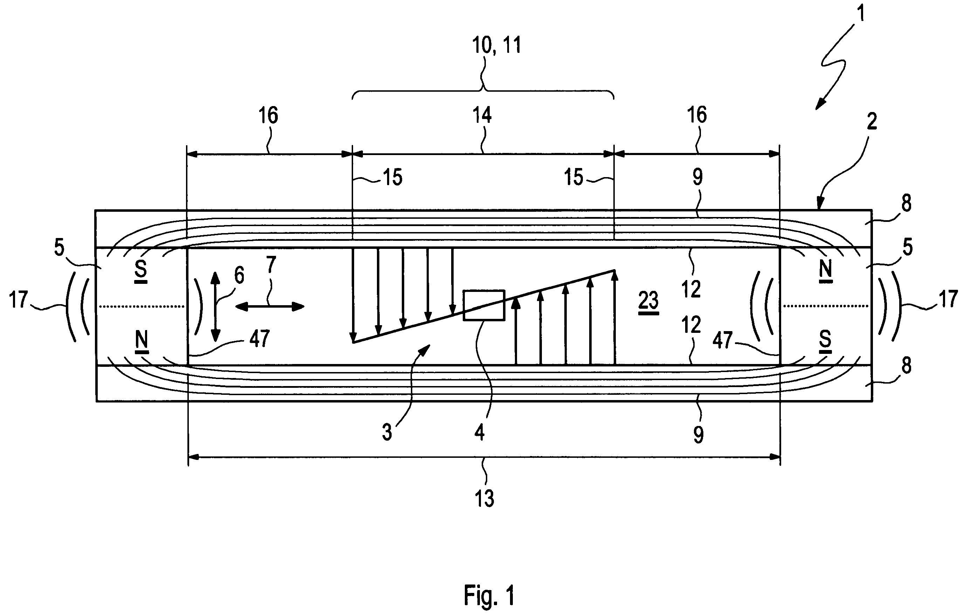

Entsprechend Fig. 1 umfasst ein linearer magnetischer Positionssensor 1 eine Magnetfelderzeugungseinrichtung 2 zum Erzeugen eines durch Pfeile angedeuteten Magnetfelds 3. Ferner weist der Positionssensor 1 einen Hallsensor 4 auf, der mit einer geeigneten, hier nicht dargestellten bzw. nicht näher bezeichneten Auswerteschaltung verbunden ist. Vorzugsweise sind der Hallsensor 4 und die Auswerteschaltung zu einem gemeinsamen Bauteil zusammengefasst. Dieses Bauteil kann z. B. als Hallsensor-IC (Hallsensor mit freiprogrammierbarer integrierter Elektronik) ausgeführt sein. Der Hallsensor 4 detektiert in bekannter Weise ein Magnetfeld und generiert damit korrelierte elektrische Messsignale.

Die Magnetfelderzeugungseinrichtung 2 weist zwei Permanentmagnete 5 auf, die bzgl. einer durch einen Doppelpfeil angedeuteten Querrichtung 6 polarisiert sind. Dementsprechend befinden sich ein Südpol S und ein Nordpol N des jeweiligen Permanentmagneten 5 bzgl. der Querrichtung 6 an entgegengesetzten Enden des jeweiligen Permanentmagneten 5. Die Permanentmagnete 5 sind beim hier vorgestellten Positionssensor 1 in einer durch einen Doppelpfeil angedeuteten Längsrichtung 7, die sich senkrecht zur Querrichtung 6 erstreckt, zueinander beabstandet angeordnet.

Die Magnetfelderzeugungseinrichtung 2 weist außerdem zwei Magnetleitelemente 8 auf, die jeweils einen Pol des einen Permanentmagneten 5 mit einem Pol des anderen Permanentmagneten 5 verbinden. Die Magnetleitelemente 8 sind magnetisch leitend. Dementsprechend entsteht ein durch Feldlinien angedeuteter magnetischer Fluss 9 durch die Magnetleitelemente 8 zwischen den Permanentmagneten 5.

Bei vorteilhaft ausgeführten Permanentmagneten 5 ist die sich in Querrichtung 6 erstreckende Höhe der Permanentmagneten 5 geringer, als die sich in Längsrichtung 7 erstreckende Länge. Somit verfügen die Permanentmagnete 5 über eine größere Anlagefläche an den Magnetleitelementen 8 und somit über einen verbesserten Übergang des Magnetfeldes auf die Magnetleitelemente 8.

Die Permanentmagnete 5 können dabei bevorzugt jeweils aus einem Stück hergestellt sein. Ebenso ist es möglich, die Permanentmagnete 5 mehrteilig auszubilden. Insbesondere können sie, vorzugsweise in der Längsrichtung 7, mehrlagig oder geschichtet ausgestaltet sein.

Der Hallsensor 4 ist nun mit einem Bereich 10 des Magnetfelds 3 angeordnet, der eine lineare Messstrecke 11 bildet. Hallsensor 4 und Magnetfelderzeugungseinrichtung 2 sind relativ zueinander entlang der Längsrichtung 7 linear verstellbar. Hierdurch kann der Hallsensor 4 innerhalb der Messstrecke 11 positioniert werden. Abhängig von seiner Relativposition in der Messstrecke 11 erzeugt der Hallsensor 4 damit korrelierte Messsignale, die in der genannten Auswerteschaltung zum Berechnen der Position des Hallsensors 4 innerhalb der Messstrecke 11 genutzt werden können.

Die Magnetleitelemente 8 bestehen zweckmäßig aus einem magnetisch leitenden Material. Hierbei handelt es sich bevorzugt um ein weichmagnetisches Material. Insbesondere kann es sich um ferromagnetisches Material handeln, wobei ein Eisenblech bevorzugt wird.

Die Magnetleitelemente 8 können dabei jeweils aus einem Stück hergestellt sein. Ebenso ist es möglich, die Magnetleitelemente 8 mehrteilig auszubilden. Insbesondere können sie, insbesondere in der Querrichtung 6, mehrlagig oder geschichtet ausgestaltet sein.

Im gezeigten Beispiel besitzt die Magnetfelderzeugungseinrichtung 2 eine geometrisch einfache Gestalt. Die Magnetleitelemente 8 sind bspw. an einer der Messstrecke 11 zugewandten Innenseite 12 eben ausgestaltet. Im Beispiel sind die einander zugewandten Innenseiten 12 der Magnetleitelemente 8 außerdem in der Längsrichtung 7 äquidistant zueinander angeordnet. Ferner erstrecken sich die Magnetleitelemente 8 hier in der Längsrichtung 7 sowie parallel zueinander. Im bevorzugten Beispiel erstrecken sie sich außerdem linear und in der Längsrichtung 7 mit einem konstanten Querschnittsprofil. Bspw. besitzen die Magnetleitelemente 8 ein rechteckiges Querschnittsprofil. Bei anderen Ausführungsformen sind grundsätzlich auch andere Geometrien für die Magnetleitelemente 8 denkbar. Bspw. können sie trapezförmig oder geknickt oder gewölbt oder auf andere Weise geformt sein. Dabei ist die jeweilige Formgebung jeweils gezielt so gewählt, dass die durch eine in das Magnetfeld 3 eingezeichnete Gerade angedeutete Linearität des Verlaufs des Magnetfelds innerhalb der linearen Messstrecke 11 unterstützt bzw. begünstigt ist.

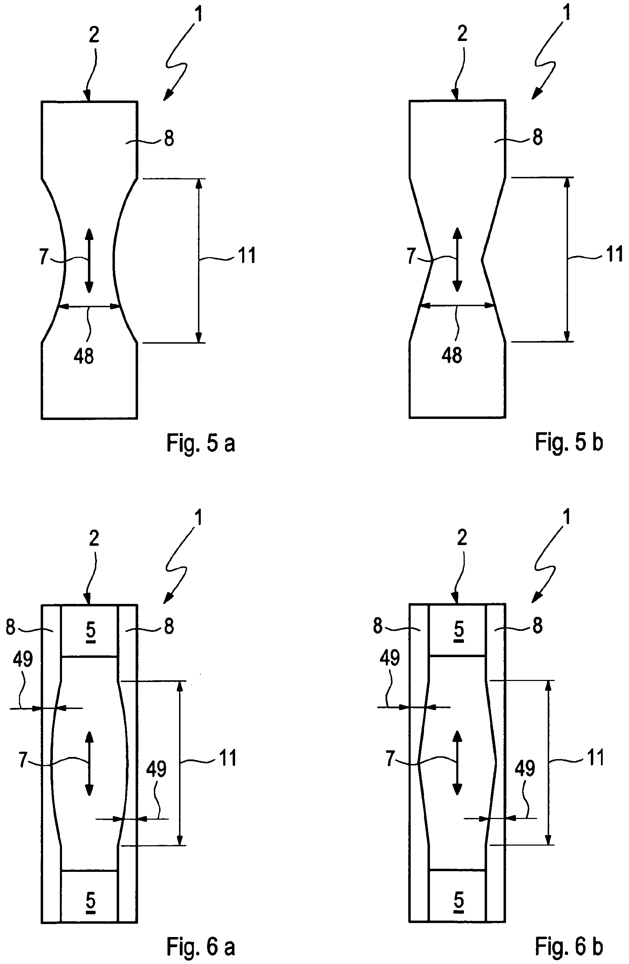

Beispielsweise zeigen die Fig. 5 und 6 Ausführungsformen, bei welchen die Magnetleitelemente 8 bezüglich der Längsrichtung 7 eine variierende Geometrie aufweisen. Beispielsweise zeigen die Fig. 5a und 5b verschiedene Ausführungsformen, bei denen eine Breite 48 der Magnetleitelemente 8 entlang der Längsrichtung 7 variiert. Die variierende Breite 48 liegt zumindest innerhalb der Messstrecke 11 vor und kann zur Linearisierung des Magnetfelds innerhalb der Messstrecke 11 genutzt werden. Fig. 5a zeigt dabei eine Ausführungsform, bei welcher die variierende Breite 48 mittels einer runden, insbesondere kreisbogenförmigen Kontur realisiert wird. Im Unterschied dazu zeigt Fig. 5b eine Ausführungsform, bei welcher die variierende Breite 48 durch eine Keilform realisiert wird.

Bei den Ausführungsformen der Fig. 6a und 6b ist dagegen vorgesehen, eine Dicke 49 des jeweiligen Magnetleitelements 8 in der Längsrichtung 7 zu variieren. Dabei ist auch hier die Variation der Dicke 49 zumindest innerhalb der Messstrecke 11 vorgesehen. Fig. 6a zeigt dabei wieder eine Ausführungsform, bei welcher die Variation der Dicke 49 durch eine gekrümmte, insbesondere kreisbogenförmige Innenkontur realisiert ist. Im Unterschied dazu zeigt Fig. 6b eine Ausführungsform, bei welcher die variierende Dicke 49 durch eine keilförmige Konturgebung an der Innenseite des jeweiligen Magnetleitelements 8 realisiert ist. Grundsätzlich kann der jeweilige Verlauf der Dicke 49 entlang der Längsrichtung 7 auch durch eine Konturierung der jeweiligen Außenseite des jeweiligen Magnetleitelements 8 realisiert werden, so dass dann die einander zugewandten Innenseiten 12 wie bei der in Fig. 1 gezeigten Ausführungsform relativ zueinander äquidistant und/oder eben sind.

Die Variation der Breite 48 in der Längsrichtung 7, wie z.B. in den Fig. 5a und 5b dargestellt, und die Variation der Dicke 49 entlang der Längsrichtung 7, wie in den Fig. 6a und 6b exemplarisch dargestellt, können alternativ oder kumulativ realisiert werden und erfolgt bevorzugt spiegelsymmetrisch bezüglich einer Spiegelebene, die sich quer zur Längsrichtung 7 mittig durch die Messstrecke 11 erstreckt.

Obwohl bei den hier gezeigten Ausführungsformen der Fig. 5 und 6 beide Magnetleitelemente 8 variierende Breiten 48 bzw. variierende Dicken 49 aufweisen, ist grundsätzlich auch eine Ausführungsform denkbar, bei der nur eines der Magnetleitelemente 8 eine variierende Breite 48 bzw. eine variierende Dicke 49 besitzt, während dann das andere Magnetleitelement 8 eine konstante Breite 48 bzw. eine konstante Dicke 49 aufweisen kann. Ebenso sind gemischte Bauformen denkbar, bei denen beispielsweise das eine Magnetleitelement 8 eine variierende Breite 48 besitzt, während das andere Magnetleitelement 8 eine variierende Dicke 49 aufweist.

Die Veränderung der Magnetleitelemente 8 in der Längsrichtung 7 bezüglich ihrer Breite 48 und/oder bezüglich ihrer Dicke 49 kann beispielsweise mittels Umformtechnik oder mittels Zerspanung realisiert werden. Ebenso ist es grundsätzlich möglich, die Magnetleitelemente 8 durch Stanzvorgänge gezielt so herzustellen, dass sie die gewünschte Geometrie besitzen.

Vorzugsweise verbindet jedes Magnetleitelement 8 den Südpol S des einen Permanentmagneten 5 mit dem Nordpol N des anderen Permanentmagneten 5. Hierdurch ergibt sich der ringförmig geschlossene Magnetflusskreis, der die Ausbildung eines linearen Magnetfelds innerhalb der Messstrecke 11 begünstigt.

Die beiden Permanentmagnete 5 sind in der Längsrichtung 7 voneinander beabstandet. Ein entsprechender Abstand oder Magnetabstand ist in Fig. 1 mit 13 bezeichnet. Die Messstrecke 11 ist in der Längsrichtung 7 kürzer als der Magnetabstand 13. Eine Länge der Messstrecke 11 ist in Fig. 1 mit 14 bezeichnet. Die Messstrecke 11 ist beim hier gezeigten bevorzugten Beispiel bzgl. der Längsrichtung 7 mittig zwischen den beiden Permanentmagneten 5 angeordnet. Dementsprechend besitzen Längsenden 15 der Messstrecke 11 jeweils einen Abstand 16 vom jeweils benachbarten Permanentmagneten 5, wobei die beiden Abstände 16 bei mittiger Anordnung der Messstrecke 11 gleich groß sind. Im Beispiel der Fig. 1 beträgt die Länge 14 der Messstrecke 11 etwa 40% des Magnetabstandes 13, der zwischen den Permanentmagneten 5 vorliegt. Allgemein erstreckt sich die Messstrecke 11 über maximal 70% oder maximal 50% des Magnetabstands 13.

Fig. 1 lässt sich somit eindeutig entnehmen, dass innenliegende Enden 47 der Permanentmagnete 5, die einander und der Messstrecke 11 zugewandt sind, den Magnetabstand 13 voneinander aufweisen, wobei der Magnetabstand 13 im gezeigten Beispiel größer ist als die Messstrecke 11. In jedem Fall sind die Permanentmagnete 5 durch die gewählte Bauweise bezüglich der Längsrichtung 7 vollständig außerhalb der Messstrecke 11 angeordnet.

Zur Realisierung eines bis zu den Längsenden 15 linearen Magnetfelds 3 innerhalb der Messstrecke 11 können die Abstände 16 so groß bemessen sein, dass an den Längsenden 15 der Einfluss eines Magnetfelds 17 des jeweils benachbarten Permanentmagneten 5 auf das in der Messstrecke 11 zwischen den Magnetleitelementen 8 herrschende Magnetfeld 3 für die Magnetfeldmessung des Hallsensors 4 vernachlässigbar ist, auch wenn sich dieser am jeweiligen Längsende 15 der Messstrecke 11 befindet. Durch die Einhaltung eines derartigen Mindestabstands 16 zwischen den Permanentmagneten 5 und den Längsenden 15 des Verstellbereiches des Hallsensors 4, kann innerhalb der Messstrecke 11 eine hochwertige Linearität des Magnetfelds 3 erreicht werden.

Des Weiteren sind die Magnetleitelemente 8 in der Querrichtung 6 so dimensioniert bzw. so dick gestaltet, dass innerhalb der Magnetleitelemente 8 keine magnetische Sättigung oder nur eine für die Magnetfeldmessung des Hallsensors 4 vernachlässigbare geringe Sättigung auftritt. Dies hat zur Folge, dass die durch die Magnetleitelemente 8 zwischen den Permanentmagneten 5 übertragenen Feldlinien nahezu ausschließlich innerhalb der Magnetleitelemente 8 verlaufen. Hierdurch können insbesondere außerhalb der Magnetleitelemente 8 verlaufende Streufelder vermieden werden, die sich nachteilig auf die Linearität des Magnetfelds 3 innerhalb der Messstrecke 11 auswirken könnten. Die innerhalb der Magnetleitelemente 8 verlaufenden magnetischen Feldlinien 9 verlaufen in einem weiten Bereich, der mittig zwischen den beiden Permanentmagneten 5 angeordnet ist, parallel zueinander, was die Ausbildung des linearen Magnetfelds 3 innerhalb der Messstrecke 11 begünstigt. Erst in einem an die Permanentmagneten 5 anschließenden Endbereich krümmen sich die Feldlinien 9, um in die jeweiligen Pole der Permanentmagnete 5 eintreten zu können bzw. daraus austreten zu können.

Im gezeigten Beispiel ist die Magnetfelderzeugungseinrichtung 2 bzgl. einer Ebene, die sich senkrecht zur Längsrichtung 7 erstreckt, spiegelsymmetrisch ausgestaltet. Im Beispiel ist die Magnetfelderzeugungseinrichtung 2 außerdem bzgl. einer Ebene, die sich senkrecht zur Querrichtung 6 erstreckt, spiegelsymmetrisch ausgestaltet. Hierdurch ergibt sich insgesamt ein geometrisch einfacher und somit preiswert realisierbarer Aufbau. Insbesondere handelt es sich bei den Permanentmagneten 5 und bei den Magnetleitelementen 8 jeweils um Gleichteile.

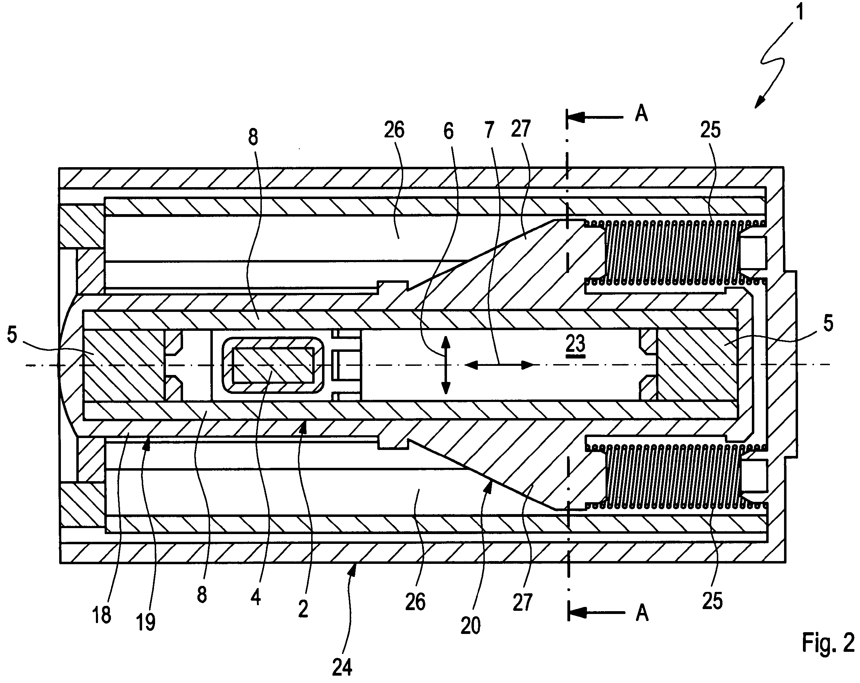

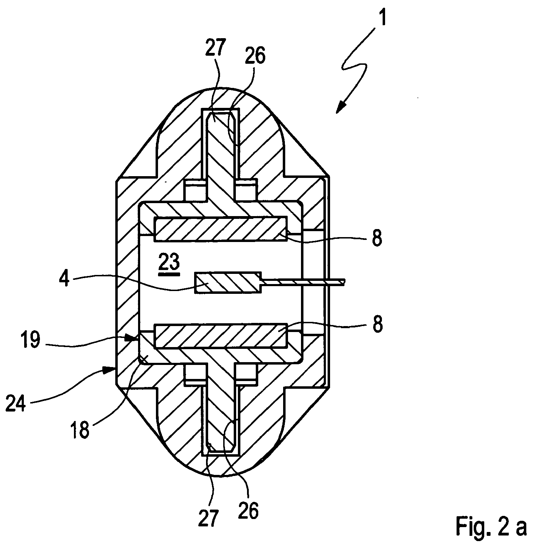

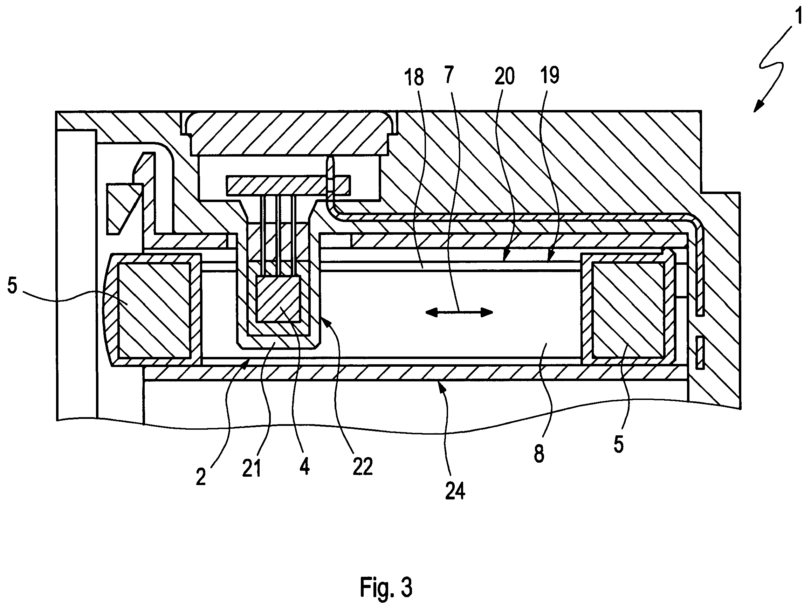

Entsprechend den Figuren 2, 2a und 3 kann die Magnetfelderzeugungseinrichtung 2 mit einem Kunststoff 18 umhüllt sein, um die einzelnen Komponenten, also die Permanentmagnete 5 und die Magnetleitelemente 8 relativ zueinander zu positionieren. Hierdurch wird zum einen eine Kunststoffhülle 19 gebildet. Gleichzeitig entsteht dadurch eine Magneteinheit 20, welche die Magnetfelderzeugungseinrichtung 2 umfasst. Der Kunststoff 18 kann an die Komponenten der Magnetfelderzeugungseinrichtung 2 angespritzt oder angegossen sein.

Auch der Hallsensor 4 kann mit einem Kunststoff 21 umhüllt sein. Zweckmäßig ist der Kunststoff 21 angespritzt oder angegossen. Der Kunststoff 21 bildet dabei einen Sensorträger 22, der in den in Fig. 1 mit 23 bezeichneten Zwischenraum seitlich eintaucht, der sich in der Querrichtung 6 zwischen den Magnetleitelementen 8 befindet.

Ferner kann der Positionssensor 1 mit einem Sensorgehäuse 24 ausgestattet sein, das den Positionssensor 1 umhüllt bzw. kapselt, und zwar derart, dass er nach außen abgedichtet ist. Die Abdichtung kann dabei eine Schmutzdichtung und/oder Feuchtigkeitsdichtung und/oder Gasdichtung realisieren.

Bei der in den Figuren 2, 2a und 3 gezeigten Ausführungsform ist der Hallsensor 4 im Sensorgehäuse 24 ortsfest angeordnet. Im Unterschied dazu ist die Magnetfelderzeugungseinrichtung 2 bzw. die Magneteinheit 20 im Sensorgehäuse 24 linear verstellbar angeordnet. Außerdem ist im Sensorgehäuse 24 hier zumindest eine, in Fig. 2 erkennbare, Vorspannfeder 25 vorgesehen. Im Beispiel sind zwei derartige Vorspannfedern 25 vorhanden. Die jeweilige Vorspannfeder 25 stützt sich einerseits am Sensorgehäuse 24 und andererseits an der Magnetfelderzeugungseinrichtung 2 bzw. an der Magneteinheit 20 ab. Hierdurch wird die Magnetfelderzeugungseinrichtung 2 bzw. die Magneteinheit 20 in eine ihrer Endstellungen vorgespannt. Im Beispiel handelt es sich bei den Vorspannfedern 25 um Schraubendruckfedern. Dabei kann die jeweilige Vorspannfeder 25 in einer Führungsnut 26 angeordnet sein, in der ein Führungselement 27 der Magnetfelderzeugungseinrichtung 2 bzw. der Magneteinheit 20 im Sensorgehäuse 24 linear geführt verstellbar angeordnet ist. Zweckmäßig wirkt die Vorspannfeder 25 nun mit dem jeweiligen Führungselement 27 zusammen. Im Beispiel sind die Führungselemente 27 an die Magnetfelderzeugungseinrichtung 2 angespritzt, sie bilden somit insbesondere einen integralen Bestandteil der Hülle 19.

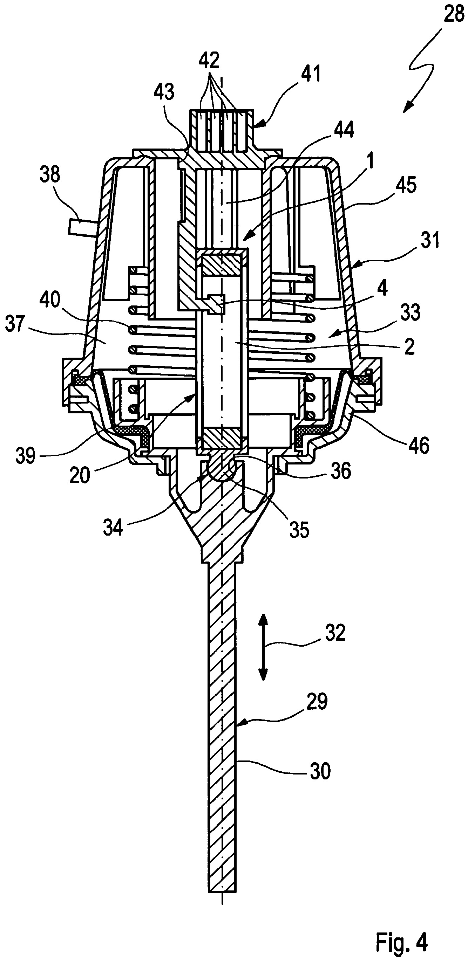

Entsprechend Fig. 4 kann der vorstehend beschriebene Positionssensor 1 in einem Linearaktuator 28 zur Anwendung kommen. Der Linearaktuator 28 kann seinerseits in einem Kraftfahrzeug verwendet werden. Er dient zur linearen Betätigung, also zum linearen Verstellen eines Bauteils, z. B. einer Klappe oder eines Schiebers oder dergleichen. Hierzu weist der Linearaktuator 28 eine Koppelstange 29 auf, die mit dem jeweiligen, hier nicht dargestellten, linear zu verstellenden Bauteil koppelbar ist. Bspw. kann die Koppelstange 29 hierzu ein Außengewinde 30 aufweisen. Ferner ist die Koppelstange 29 relativ zu einem Aktuatorgehäuse 31 entsprechend einem Doppelpfeil 32 linear verstellbar. Außerdem weist der Linearaktuator 28 eine Aktuatoreinrichtung 33 auf, mit deren Hilfe die Koppelstange 29 relativ zum Aktuatorgehäuse 31 linear verstellbar ist. Der Positionssensor 1 ist baulich so in den Linearaktuator 28 integriert, dass mit Hilfe des Positionssensors 1 die Relativlage zwischen Koppelstange 29 und Aktuatorgehäuse 31 erfasst werden kann. Bevorzugt ist dabei die in Fig. 4 gezeigte Ausführungsform, bei welcher die Koppelstange 29 mit dem Magnetfelderzeugungseinrichtung 2 antriebsverbunden ist, während der Hallsensor 4 ortsfest am Aktuatorgehäuse 31 angeordnet ist. Die lineare Verstellung der Koppelstange 29, relativ zum Aktuatorgehäuse 31, führt dann zu einer entsprechenden Linearverstellung zwischen Magnetfelderzeugungseinrichtung 2 und Hallsensor 4.

Im gezeigten Beispiel ist die Koppelstange 29 über ein Kugelkopfgelenk 34 mit der Magnetfelderzeugungseinrichtung 2 antriebsgekoppelt. Das Kugelkopfgelenk 34 umfasst einen Kugelkopf 35 und eine Kugelpfanne 36. Im Beispiel ist der Kugelkopf 35 integral an der Magnetfelderzeugungseinrichtung 2 bzw. integral an der Magneteinheit 20 ausgeformt. Bspw. bildet der Kugelkopf 35 einen integralen Bestandteil der an die übrigen Komponenten der Magnetfelderzeugungseinrichtung 2 angespritzten Hülle 19. Die Kugelpfanne 36 ist im Beispiel durch einen integral ausgeformten Bestandteil der Kopplungsstange 29 gebildet. Das Kugelkopfgelenk 34 eliminiert Herstellungstoleranzen und ermöglicht außerdem eine spielfreie Kopplung zwischen Koppelstange 29 und Positionssensor 1. Es ist klar, dass grundsätzlich auch andere geeignete Kopplungen realisierbar sind.

Zweckmäßig arbeitet die Aktuatoreinrichtung 33 pneumatisch. In diesem Fall weist das Aktuatorgehäuse 31 eine Steuerkammer 37 auf, die z. B. über einen entsprechenden Steuerdruckanschluss 38 mit einem pneumatischen Steuerdruck beaufschlagbar ist. Die Steuerkammer 37 ist mit einer elastischen Membran 39 verschlossen. Die Membran 39 ist elastisch verformbar. Die Koppelstange 29 ist mit der Membran 39 antriebsverbunden. Im Beispiel durchsetzt die Koppelstange 29 die Membran 39, wobei eine dichte Verbindung zwischen der Membran 39 und der Koppelstange 29 vorliegt. Abhängig vom Steuerdruck in der Steuerkammer 37 verformt sich die Membran 39, was zur gewünschten linearen Verstellung 32 der Koppelstange 29 führt. Im Beispiel der Fig. 4 ist die Koppelstange 29 mittels einer Rückstellfeder 40, die in der Steuerkammer 37 bzw. im Aktuatorgehäuse 31 angeordnet ist, in eine Endstellung vorgespannt.

Für die hier vorgeschlagene Verwendung des Positionssensors 1 im Linearaktuator 28 kann der Positionssensor 1 eine Hallsensoreinheit 41 aufweisen. Diese Hallsensoreinheit 41 umfasst den Hallsensor 4 sowie elektrische Anschlüsse 42 des Positionssensors 1. Über die Anschlüsse 42 können die vom Hallsensor 4 generierten Signale abgegriffen werden. Die Hallsensoreinheit 41 ist bspw. durch einen Spritzgussvorgang integral hergestellt. Der Hallsensor 4 sowie die zu den Anschlüssen 42 führenden Leitungen sind dann von der spitzgeformten Hallsensoreinheit 41 umschlossen. Die Hallsensoreinheit 41 ist an das Aktuatorgehäuse 31 angebaut. Hierzu kann das Aktuatorgehäuse 31 eine entsprechende Montageöffnung 43 aufweisen.

Im Aktuatorgehäuse 31 ist eine Linearführung 44 ausgebildet, insbesondere integral ausgeformt. Mit dieser Linearführung 44 wirkt die Magneteinheit 20 zusammen, derart, dass die Magneteinheit 44 in der Linearführung 44 parallel zur Linearverstellung 32 der Koppelstange 29 am Aktuatorgehäuse 31 linear geführt verstellbar ist.

Das Aktuatorgehäuse 31 weist in der in Fig. 4 gezeigten Ausführungsform einen topfförmigen Körper 45 auf, der mit einem Deckel 46 verschlossen ist. Zwischen diesem Topfkörper 45 und dem Deckel 46 ist die Membran 39 eingespannt. Gleichzeitig bildet der Deckel 46 für die Koppelstange 29 einen Endanschlag, wenn diese, z. B. angetrieben durch die Rückstellfeder 40 maximal aus dem Aktuatorgehäuse 31 herausbewegt ist.

## Patentansprüche

1. Linearaktuator, insbesondere für ein Kraftfahrzeug,
- mit einer Koppelstange (29), die mit einem linear zu verstellenden Bauteil koppelbar ist und die relativ zu einem Aktuatorgehäuse (31) linear verstellbar ist,
- mit einer Aktuatoreinrichtung (33) zur linearen Verstellung der Koppelstange (29),
- mit einem linearen magnetischen Positionssensor (1) zum Erfassen der Relativlage zwischen Koppelstange (29) und Aktuatorgehäuse (31),
- wobei der Positionssensor (1) eine zwei Permanentmagnete (5) aufweisende Magnetfelderzeugungseinrichtung (2) zum Erzeugen eines Magnetfelds (3) aufweist,
- wobei der Positionssensor (1) einen Hallsensor (4) aufweist, der in einem eine lineare Messstrecke (11) bildenden Bereich (10) des Magnetfelds (3) angeordnet ist, wobei Hallsensor (4) und Magnetfelderzeugungseinrichtung (2) relativ zueinander entlang einer Längsrichtung (7) linear verstellbar sind, um den Hallsensor (4) innerhalb der Messstrecke (11) zu positionieren,
**dadurch gekennzeichnet,**
- **dass** die Permanentmagnete (5) in einer senkrecht zur Längsrichtung (7) verlaufenden Querrichtung (6) polarisiert sind,
- **dass** die Permanentmagnete (5) in der Längsrichtung (7) zueinander beabstandet angeordnet sind,
- **dass** jeder Pol des einen Permanentmagneten (5) über je ein Magnetleitelement (8) mit einem Pol des anderen Permanentmagneten (5) verbunden ist,
- **dass** die Messstrecke (11), innerhalb welcher der Hallsensor (4) linear positionierbar ist, in der Längsrichtung (7) kürzer ist als ein Magnetabstand (13) zwischen den Permanentmagneten (5),
- **dass** sich die Messstrecke (11) in der Längsrichtung (7) über maximal 70% des Magnetabstands (13) erstreckt.

2. Positionssensor nach Anspruch 1,
**dadurch gekennzeichnet,**
**dass** die Messstrecke (11) mittig zwischen den Permanentmagneten (5) angeordnet ist.

3. Linearaktuator nach Anspruch 1 oder 2,
**dadurch gekennzeichnet,**
**dass** sich die Messstrecke (11) in der Längsrichtung (7) über maximal 50% des Magnetabstands (13) erstreckt.

4. Linearaktuator nach einem der Ansprüche 1 bis 3,
**dadurch gekennzeichnet,**
**dass** die Messstrecke (11) an ihren Längsenden (15) so weit von den Permanentmagneten (5) beabstandet ist, dass an den Längsenden (15) der Messstrecke (11) der Einfluss des Magnetfelds (17) des benachbarten Permanentmagneten (5) auf das in der Messstrecke (11) zwischen den Magnetleitelementen (8) herrschende Magnetfeld (3) für die Magnetfeldmessung des Hallsensors (4) vernachlässigbar ist.

5. Linearaktuator nach einem der Ansprüche 1 bis 4,
**dadurch gekennzeichnet,**
- **dass** der Messstrecke (11) zugewandte innenliegende Enden (47) der Permanentmagnete (5) in der Längsrichtung (7) einen Magnetabstand (13) voneinander aufweisen, der mindestens gleich groß ist wie die Messstrecke (11), und/oder
- **dass** die Permanentmagnete (5) in der Längsrichtung (7) vollständig außerhalb der Messstrecke (11) angeordnet sind.

6. Linearaktuator nach einem der Ansprüche 1 bis 5,
**dadurch gekennzeichnet,**
**dass** die Magnetleitelemente (8) geometrisch so gestaltet sind, dass in der Messstrecke (11) ein im Wesentlichen lineares Magnetfeld (17) vorliegt.

7. Linearaktuator nach einem der Ansprüche 1 bis 6,
**dadurch gekennzeichnet,**
**dass** die Magnetleitelemente (8) entlang der Längsrichtung (7) eine, insbesondere spiegelsymmetrisch, variierende Breite (48) und/oder Dicke (49) aufweisen, wobei sie insbesondere an einander und der Messstrecke (11) zugewandten Innenseiten (12) in der Längsrichtung (7) äquidistant und/oder eben sein können.

8. Linearaktuator nach einem der Ansprüche 1 bis 7,
**dadurch gekennzeichnet,**
- **dass** die Magnetleitelemente (8) aus einem weichmagnetischen Material, insbesondere aus einem ferromagnetischen Material, vorzugsweise aus einem Eisenblech bestehen, und/oder
- **dass** sich die Magnetleitelemente (8) in der Längsrichtung (7) erstrecken, und/oder
- **dass** sich die Magnetleitelemente (8) parallel zueinander erstrecken, und/oder
- **dass** sich die Magnetleitelemente (8) linear erstrecken, und/oder
- **dass** die Magnetleitelemente (8) in der Längsrichtung jeweils ein konstantes Querschnittsprofil aufweisen, und/oder
- **dass** jedes Magnetleitelement (8) den Südpol (S) des einen Permanentmagneten (5) mit dem Nordpol (N) des anderen Permanentmagneten (5) verbindet.

9. Linearaktuator nach einem der Ansprüche 1 bis 8,
**dadurch gekennzeichnet,**
**dass** die Magnetleitelemente (8) in der Querrichtung (6) so dick sind, dass in den Magnetleitelementen (8) eine vernachlässigbare oder keine magnetische Sättigung auftritt.

10. Linearaktuator nach einem der Ansprüche 1 bis 9,
**dadurch gekennzeichnet,**
- **dass** die Magnetfelderzeugungseinrichtung (2) mit Kunststoff (18) umhüllt ist, insbesondere umspritzt oder umgossen ist, und/oder
- **dass** der Hallsensor (4) mit Kunststoff (21) umhüllt ist, insbesondere umspritzt oder umgossen ist, und/oder
- **dass** der Positionssensor (1) in einem Sensorgehäuse (24) gekapselt ist, derart, dass er nach außen schmutzdicht und/oder feuchtigkeitsdicht und/oder gasdicht ist.

11. Linearaktuator nach einem der Ansprüche 1 bis 10,
**dadurch gekennzeichnet,**
**dass** die Magnetfelderzeugungseinrichtung (2) bzgl. einer sich senkrecht zur Längsrichtung (7) erstreckenden Ebene und/oder bzgl. einer sich senkrecht zur Querrichtung (6) erstreckenden Ebene spiegelsymmetrisch ausgestaltet ist.

12. Linearaktuator nach einem der Ansprüche 1 bis 11,
**dadurch gekennzeichnet,**
**dass** der Hallsensor (4) in einem Sensorgehäuse (24) ortsfest angeordnet ist, während die Magnetfelderzeugungseinrichtung (2) als Magneteinheit (20) im Sensorgehäuse (24) linear verstellbar angeordnet ist.

13. Linearaktuator nach Anspruch 12,
**dadurch gekennzeichnet,**
**dass** im Sensorgehäuse (24) zumindest eine Vorspannfeder (25) angeordnet ist, die sich einerseits am Sensorgehäuse (24) und andererseits an der Magnetfelderzeugungseinrichtung (2) abstützt und diese in eine Endstellung vorspannt, wobei insbesondere vorgesehen sein kann, dass die jeweilige Vorspannfeder (25) in einer Führungsnut (26) angeordnet ist, in der ein mit der Vorspannfeder (25) zusammenwirkendes Führungselement (27) der Magnetfelderzeugungseinrichtung (2) linear geführt verstellbar angeordnet ist.

14. Linearaktuator nach einem der Ansprüche 1 bis 13,
**dadurch gekennzeichnet,**
**dass** die Koppelstange (29) mit der Magnetfelderzeugungseinrichtung (2) antriebsverbunden ist, während der Hallsensor (4) ortsfest an dem Aktuatorgehäuse (31) angeordnet ist, wobei insbesondere vorgesehen sein kann, dass die Koppelstange (29) über ein Kugelkopfgelenk (34) mit der Magnetfelderzeugungseinrichtung (2) antriebsgekoppelt ist, wobei optional vorgesehen sein kann, dass ein Kugelkopf (35) des Kugelkopfgelenks (34) an der Magnetfelderzeugungseinrichtung (2) integral ausgeformt ist.

15. Linearaktuator nach einem der Ansprüche 1 bis 14,
**dadurch gekennzeichnet,**
- **dass** die Aktuatoreinrichtung (33) pneumatisch arbeitet und im Aktuatorgehäuse (31) eine Steuerkammer (37) aufweist, die mit einem pneumatischen Steuerdruck beaufschlagbar ist und die mit einer elastischen Membran (39) verschlossen ist, wobei die Koppelstange (29) mit der Membran (39) antriebsverbunden ist, und/oder
- **dass** eine Hallsensoreinheit (41) vorgesehen ist, die den Hallsensor (4) und elektrische Anschlüsse (42) des Positionssensors (1) aufweist und die an das Aktuatorgehäuse (31) angebaut ist, und/oder
- **dass** eine Magneteinheit (20) vorgesehen ist, die die Magnetfelderzeugungseinrichtung (2) aufweist und die in einer am Aktuatorgehäuse (31) ausgebildeten Linearführung (44) linear geführt verstellbar angeordnet ist.

## Claims

1. Linear actuator, in particular for a motor vehicle, comprising
- a coupling rod (29) couplable with a linearly movable component and linearly movable relative to an actuator housing (31),
- an actuator device (33) for linear adjustment of the coupling rod (29),
- a linear magnetic position sensor (1) for detecting the position of the coupling rod (29) relative to the actuator housing (31),
- wherein the position sensor (1) comprises a magnetic field generating unit (2) for generating a magnetic field (3), the magnetic field generating unit (2) comprising two permanent magnets (5),
- wherein the position sensor (1) comprises a Hall sensor (4) positioned in an area (10) of a magnetic field (3) forming a linear measuring section (11), wherein the Hall sensor (4) and the magnetic field generating unit (2) are linearly movable relative to each other along a longitudinal direction (7) so as to position the Hall sensor (4) within the measuring section (11),
**characterized in that**
- the permanent magnets (5) are polarized in a transverse direction (6) perpendicular to the longitudinal direction (7),
- the permanent magnets (5) are positioned spaced apart from each other in the longitudinal direction (7),
- each pole of the first permanent magnet (5) is connected to a pole of the second permanent magnet (5) by a respective magnetic conductor element (8),
- the measuring section (11) within which the Hall sensor (4) may be linearly positioned is shorter in the longitudinal direction (7) than an inter-magnet distance (13) between the permanent magnets (5),
- the measuring section (11) extends in the longitudinal direction (7) over a maximum of 70% of the inter-magnet distance (13).

2. Position sensor according to claim 1,
**characterized in that**
the measuring section (11) is positioned centrally between the permanent magnets (5).

3. Linear actuator according to any of claims 1 or 2,
**characterized in that**
the measuring section (11) extends in the longitudinal direction (7) over a maximum of 50% of the inter-magnet distance (13).

4. Linear actuator according to any of claims 1 to 3,
**characterized in that**
the measuring section (11) is at its longitudinal ends (15) spaced apart from the permanent magnets (5) by a distance such that the influence of the magnetic field (17) due to the respective adjacent permanent magnet (5) at each longitudinal end (15) of the measuring section (11) on the magnetic field (3) that is present between the magnetic conductor elements (8) in the measuring section (11) can be neglected in the measurement of the magnetic field of Hall sensor (4).

5. Linear actuator according to any of claims 1 to 4,
**characterized in that**
- the inner ends (47) of the permanent magnets (5) facing the measuring section (11) are positioned in the longitudinal direction (7) at an inter-magnet distance (13) from each other that is at least as large as the length of measuring section (11), and/or
- the permanent magnets (5) are positioned in the longitudinal direction (7) entirely outside the measuring section (11).

6. Linear actuator according to any of claims 1 to 5,
**characterized in that**
the magnetic conductor elements (8) are geometrically configured so as to provide a substantially linear magnetic field (17) in the measuring section (11).

7. Linear actuator according to any of claims 1 to 6,
**characterized in that**
the magnetic conductor elements (8) have a varying, in particular mirrorsymmetric, width (48) and/or thickness (49) along the longitudinal direction (7), wherein the magnetic conductor elements (8) may be equidistant in the longitudinal direction (7) and/or have flat inner sides (12) facing each other or facing towards the measuring section (11).

8. Linear actuator according to any of claims 1 to 7,
**characterized in that**
- the magnetic conductor elements (8) are made of a soft magnetic material, in particular a ferromagnetic material, and preferably of an iron plate,
- the magnetic conductor elements (8) extend in the longitudinal direction (7), and/or
- the magnetic conductor elements (8) extend parallel to each other, and/or
- the magnetic conductor elements (8) extend linearly, and/or
- the magnetic conductor elements (8) comprise in the longitudinal direction a respective constant cross-sectional profile, and/or
- each magnetic conductor element (8) connects the south pole (S) of the first permanent magnet (5) to the north pole (N) of the second permanent magnet (5).

9. Linear actuator according to any of claims 1 to 8,
**characterized in that**
the magnetic conductor elements (8) in the transverse direction (6) have a thickness such that the magnetic saturation occurring in the magnetic conductor elements (8) is negligible or non-existent.

10. Linear actuator according to any of claims 1 to 9,
**characterized in that**
- the magnetic field generating unit (2) is plastic-coated (18), in particular spray-coated or dip-coated, and/or
- the Hall sensor (4) is plastic-coated (21), in particular spray-coated or dip-coated, and/or
- the position sensor (1) is enclosed in a sensor housing (24) such that it is dirtproof and/or moisture-proof and/or gastight to the exterior.

11. Linear actuator according to any of claims 1 to 10,
**characterized in that**
the magnetic field generating unit (2) is configured mirror-symmetrically with respect to a surface extending perpendicular to longitudinal direction (7) and/or with respect to a surface extending perpendicular to transverse direction (6).

12. Linear actuator according to any of claims 1 to 11,
**characterized in that**
the Hall sensor (4) is stationarily positioned in a sensor housing (24), the magnetic field generating unit (2) being a linearly movable magnet unit (20) within the sensor housing (24).

13. Linear actuator according to claim 12,
**characterized in that**
at least one biassing spring (25) is provided within the sensor housing (24), the spring (25) engaging on one side the sensor housing (24) and on the other side the magnetic field generating unit (2), thereby biassing the magnetic field generating unit (2) into an end position, wherein in particular each biassing spring (25) may be positioned in a guiding groove (26) in which a guiding element (27) of the magnetic field generating unit (2) is positioned so as to be linearly movable, the guiding element (27) interacting with the biassing spring (25).

14. Linear actuator according to any of claims 1 to 13,
**characterized in that**
the coupling rod (29) is operationally coupled with the magnetic field generating unit (2), and the Hall sensor (4) is stationarily positioned on the actuator housing (31), wherein in particular the coupling rod (29) may be operationally coupled with the magnetic field generating unit (2) via a ball joint (34), and wherein optionally a ball (35) of the ball joint (34) is integrally formed with the magnetic field generating unit (2).

15. Linear actuator according to any of claims 1 to 14,
**characterized in that**
- the actuator device (33) operates pneumatically and comprises a control chamber (37) in the actuator housing (31), the control chamber (37) being pressurized with a pneumatic control pressure and sealed by an elastic membrane (39), wherein the coupling rod (29) is operationally coupled with the membrane (39), and/or
- a Hall sensor unit (41) is provided comprising the Hall sensor (4) and electrical connections (42) of the position sensor (1), the Hall sensor unit (41) being mounted on the actuator housing (31), and/or
- a magnet unit (20) is provided comprising the magnetic field generating unit (2) and located so as to be linearly movable on a linear bearing (44) formed on the actuator housing (31).

## Revendications

1. Actionneur linéaire, en particulier pour un véhicule automobile,
- comprenant une tige de couplage (29), qui peut être couplée à un composant devant être déplacé de manière linéaire et qui peut être déplacé de manière linéaire par rapport à un boîtier d'actionneur (31),
- comprenant un dispositif actionneur (33) servant à déplacer de manière linéaire la tige de couplage (29),
- comprenant un capteur de position (1) magnétique linéaire servant à détecter la position relative entre la tige de couplage (29) et le boîtier actionneur (31),
- dans lequel le capteur de position (1) présente un dispositif de génération de champ magnétique (2) présentant deux aimants permanents (5), servant à générer un champ magnétique (3),
- dans lequel le capteur de position (1) présente un capteur à effet Hall (4), qui est disposé dans une zone (10), formant un parcours de mesure (11) linéaire, du champ magnétique (3), dans lequel le capteur à effet Hall (4) et le dispositif de production de champ magnétique (2) peuvent être déplacés l'un par rapport à l'autre de manière linéaire le long d'une direction longitudinale (7) afin de positionner le capteur à effet Hall (4) à l'intérieur du parcours de mesure (11),
**caractérisé en ce**
- **que** les aimants permanents (5) sont polarisés dans une direction transversale (6) s'étendant de manière perpendiculaire par rapport à la direction longitudinale (7),
- **que** les aimants permanents (5) sont disposés à distance les uns des autres dans la direction longitudinale (7),
- **que** chaque pôle d'un des aimants permanents (5) est relié, par l'intermédiaire d'un élément conducteur magnétique (8) respectivement, à un pôle de l'autre aimant permanent (5),
- **que** le parcours de mesure (11), à l'intérieur duquel le capteur à effet Hall (4) peut être positionné de manière linéaire, est plus court dans la direction longitudinale (7) qu'une distance (13) entre les aimants permanents (5),
- **que** le parcours de mesure (11) s'étend dans la direction longitudinale (7) sur 70 % au maximum de la distance entre les aimants (13).

2. Capteur de position selon la revendication 1,
**caractérisé en ce**
**que** le parcours de mesure (11) est disposé au centre entre les aimants permanents (5).

3. Actionneur linéaire selon la revendication 1 ou 2,
**caractérisé en ce**
**que** le parcours de mesure (11) s'étend dans la direction longitudinale (7) sur 50 % au maximum de la distance entre les aimants (13).

4. Actionneur linéaire selon l'une quelconque des revendications 1 à 3,
**caractérisé en ce**
**que** le parcours de mesure (11) est tenu à distance, au niveau de ses extrémités longitudinales (15), aussi loin des aimants permanents (5) que l'incidence du champ magnétique (17) de l'aimant permanent (5) adjacent sur le champ magnétique (3) régnant dans le parcours de mesure (11) entre les éléments conducteurs magnétiques (8) est négligeable pour la mesure de champ magnétique du capteur à effet Hall (4) au niveau des extrémités longitudinales (15) du parcours de mesure (11).

5. Actionneur linéaire selon l'une quelconque des revendications 1 à 4,
**caractérisé en ce**
- **que** des extrémités (47), situées à l'intérieur tournées vers le parcours de mesure (11), des aimants permanents (5) présentent, dans la direction longitudinale (7), une distance entre les aimants (13) les unes des autres, qui est au moins aussi grande que le parcours de mesure (11), et/ou
- **que** les aimants permanents (5) sont disposés dans la direction longitudinale (7) totalement à l'extérieur du parcours de mesure (11).

6. Actionneur linéaire selon l'une quelconque des revendications 1 à 5,
**caractérisé en ce**
**que** les éléments conducteurs magnétiques (8) sont configurés géométriquement de telle sorte qu'un champ magnétique(17) essentiellement linéaire est présent dans le parcours de mesure (11).

7. Actionneur linéaire selon l'une quelconque des revendications 1 à 6,
**caractérisé en ce**
**que** les éléments conducteurs linéaires (8) présentent, le long de la direction longitudinale (7), une largeur (48) et/ou une épaisseur (49) variant en particulier de manière symétrique en miroir,
dans lequel lesdits éléments conducteurs magnétiques peuvent être équidistants et/ou plans dans la direction longitudinale (7) en particulier au niveau de côtés intérieurs (12) tournés les uns vers les autres et vers le parcours de mesure (11).

8. Actionneur linéaire selon l'une quelconque des revendications 1 à 7,
**caractérisé en ce**
- **que** les éléments conducteurs magnétiques (8) sont constitués d'un matériau magnétique mou, en particulier d'un matériau ferromagnétique, de préférence d'une tôle de fer, et/ou
- **que** les éléments conducteurs magnétiques (8) s'étendent dans la direction longitudinale (7),
et/ou
- **que** les éléments conducteurs magnétiques (8) s'étendent de manière parallèle les uns par rapport aux autres, et/ou
- **que** les éléments conducteurs magnétiques (8) s'étendent de manière linéaire, et/ou
- **que** les éléments conducteurs magnétiques (8) présentent, dans la direction longitudinale, respectivement un profil de section transversale constant, et/ou
- **que** chaque élément conducteur magnétique (8) relie le pôle Sud (S) d'un des aimants permanents (5) au pôle Nord (N) de l'autre aimant permanent (5).

9. Actionneur linéaire selon l'une quelconque des revendications 1 à 8,
**caractérisé en ce**
**que** les éléments conducteurs magnétiques (8) sont si épais dans la direction transversale (6) qu'une saturation magnétique négligeable apparaît dans les éléments conducteurs magnétiques (8) ou qu'aucune saturation magnétique n'apparaît dans les éléments conducteurs magnétiques.

10. Actionneur linéaire selon l'une quelconque des revendications 1 à 9,
**caractérisé en ce**
- **que** le dispositif de production de champ magnétique (2) est enveloppé de plastique (18), en particulier est entouré de plastique par injection ou par moulage, et/ou
- **que** le capteur à effet Hall (4) est enveloppé de plastique (21), en particulier est entouré de plastique par injection ou par moulage, et/ou
- **que** le capteur de position (1) est encaspulé dans un boîtier de capteur (24), de telle manière qu'il est étanche aux saletés et/ou à l'humidité et/ou aux gaz par rapport à l'extérieur.

11. Actionneur linéaire selon l'une quelconque des revendications 1 à 10,
**caractérisé en ce**
**que** le dispositif de génération de champ magnétique (2) est configuré de manière symétrique en miroir par rapport à un plan s'étendant de manière perpendiculaire par rapport à la direction longitudinale (7) et/ou par rapport à un plan s'étendant de manière perpendiculaire par rapport à la direction transversale (6).

12. Actionneur linéaire selon l'une quelconque des revendications 1 à 11,
**caractérisé en ce**
**que** le capteur à effet Hall (4) est disposé de manière stationnaire dans un boîtier de capteur (24), tandis que le dispositif de génération de champ magnétique (2) est disposé sous la forme d'une unité magnétique (20) de manière à pouvoir être déplacé de manière linéaire dans le boîtier de capteur (24).

13. Actionneur linéaire selon la revendication 12,
**caractérisé en ce**
**qu'**au moins un ressort de précontrainte (25) est disposé dans le boîtier de capteur (24), lequel prend appui d'une part au niveau du boîtier de capteur (24) et d'autre part au niveau du dispositif de génération de champ magnétique (2) et précontraint ce dernier dans une position de fin de course, dans lequel l'invention peut prévoir en particulier que le ressort de précontrainte (25) respectif est disposé dans une rainure de guidage (26), dans laquelle un élément de guidage (27), coopérant avec le ressort de précontrainte (25), du dispositif de génération de champ magnétique (2) est disposé de manière à pouvoir être déplacé par un guidage linéaire.

14. Actionneur linéaire selon l'une quelconque des revendications 1 à 13,
**caractérisé en ce**
**que** la tige de couplage (29) est reliée en entraînement au dispositif de génération de champ magnétique (2), tandis que le capteur à effet Hall (4) est disposé de manière stationnaire au niveau du boîtier d'actionneur (31), dans lequel l'invention peut prévoir en particulier que la tige de couplage (29) est couplée en entraînement par l'intermédiaire d'une articulation à rotule (34) au dispositif de génération de champ magnétique (2), dans lequel l'invention peut prévoir en option qu'une rotule (35) de l'articulation à rotule (34) est formée intégralement au niveau du dispositif de génération de champ magnétique (2).

15. Actionneur linéaire selon l'une quelconque des revendications 1 à 14,
**caractérisé en ce**
- **que** le dispositif actionneur (33) fonctionne de manière pneumatique et présente, dans le boîtier d'actionneur (31), une chambre de commande (37), qui peut être soumise à l'action d'une pression de commande pneumatique et qui est fermée par une membrane (39) élastique, dans lequel la tige de couplage (29) est reliée en entraînement à la membrane (39), et/ou
- **qu'**une unité de capteur à effet Hall (41) est prévue, laquelle présente le capteur à effet Hall (4) et des raccords (42) électriques du capteur de position (1) et qui est montée au niveau du boîtier d'actionneur (31), et/ou
- **qu'**une unité magnétique (20) est prévue, laquelle présente le dispositif de génération de champ magnétique (2) et qui est disposée de manière à pouvoir être déplacée par un guidage linéaire dans un guidage linéaire (44) réalisé au niveau du boîtier d'actionneur (31).
